(19) Europäisches Patentamt
European Patent Office
Office européen des brevets

(11) **EP 4 757 096 A1**

(12) **EUROPEAN PATENT APPLICATION**
published in accordance with Art. 153(4) EPC

(43) Date of publication:
**10.06.2026  Bulletin 2026/24**

(21) Application number: **24848720.9**

(22) Date of filing: **20.06.2024**

(51) International Patent Classification (IPC):
***H02J 3/00*** (2026.01)      ***G06Q 50/04*** (2012.01)
***G06Q 50/06*** (2024.01)

(52) Cooperative Patent Classification (CPC):
**G06Q 50/04; G06Q 50/06; H02J 3/00**

(86) International application number:
**PCT/JP2024/022404**

(87) International publication number:
**WO 2025/028059 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **31.07.2023   JP 2023124183**

(71) Applicant: **OMRON Corporation
Kyoto-shi, Kyoto 600-8530 (JP)**

(72) Inventors:
 • **TAKIGUCHI, Hideaki
   Kyoto-shi, Kyoto 600-8530 (JP)**
 • **MIZUYAMA, Mai
   Kyoto-shi, Kyoto 600-8530 (JP)**
 • **OKADA, Naoki
   Kyoto-shi, Kyoto 600-8530 (JP)**
 • **SOMA, Hiroshi
   Kyoto-shi, Kyoto 600-8530 (JP)**
 • **NAKAI, Takaki
   Kyoto-shi, Kyoto 600-8530 (JP)**

(74) Representative: **Mewburn Ellis LLP
Aurora Building
Counterslip
Bristol BS1 6BX (GB)**

(54)   **PREDICTION SYSTEM, AGGREGATION SYSTEM, METHOD, AND PROGRAM**

(57)   A prediction system predicts power demand of each of one or more facilities configured to produce a product. The prediction system includes: a calculation unit configured to calculate, for each of the one or more facilities, a scheduled power usage amount in a target time slot, based on actual result data of consumed power and a production plan of the product; and a determination unit configured to determine, for each of the one or more facilities, a scheduled power purchase amount from a power system in the target time slot, based on the scheduled power usage amount and a power trading price in the target time slot. Thereby, the prediction system can provide information capable of improving a merit for a consumer obtained by cooperating on a request for a demand response.

FIG.1

**Description**

TECHNICAL FIELD

The present disclosure relates to a prediction system, a method, and a program for predicting power demand, and an aggregation system for adjusting balance of demand and supply of power.

BACKGROUND ART

In recent years, a demand response (DR) for stably supplying power has become more important. The demand response is a mechanism by which a consumer can receive a reward when the consumer performs power saving, power storage, and the like in response to a request and makes an achievement.

Japanese Patent Laying-Open No. 2016-81074 (PTL 1) discloses a technique of periodically updating a list of capabilities of responding to a demand response, from a plan of using an installation based on a production plan.

CITATION LIST

PATENT LITERATURE

PTL 1: Japanese Patent Laying-Open No. 2016-81074

SUMMARY OF INVENTION

TECHNICAL PROBLEM

According to the technique disclosed in PTL 1, the list of capabilities of responding to a demand response is updated based only on the production plan. Accordingly, a consumer having the installation may cooperate on a DR request in a state where the merit for the consumer is small.

The present disclosure has been made in view of the aforementioned problem, and an object of the present disclosure is to provide a prediction system, a method, and a program for providing information capable of improving a merit for a consumer obtained by cooperating on a request for a DR. Furthermore, another object of the present disclosure is to provide an aggregation system capable of adjusting balance of demand and supply of power in consideration of a merit for a consumer obtained by cooperating on a request for a DR.

SOLUTION TO PROBLEM

According to one example of the present disclosure, a prediction system predicts power demand of each of one or more facilities configured to produce a product. The prediction system includes: a calculation unit configured to calculate, for each of the one or more facilities, a scheduled power usage amount in a target time slot, based on actual result data of consumed power and a production plan of the product; and a determination unit configured to determine, for each of the one or more facilities, a scheduled power purchase amount from a power system in the target time slot, based on the scheduled power usage amount and a power trading price in the target time slot.

According to the present disclosure, the scheduled power purchase amount from the power system is determined based on the power trading price. Accordingly, the scheduled power purchase amount is determined in consideration of a merit (typically, a reward) for a consumer obtained by cooperating on a request for a DR. Thus, the prediction system can provide information capable of improving the merit for the consumer obtained by cooperating on a request for a DR.

In the above disclosure, the determination unit is configured to further determine a partial amount of the scheduled power usage amount to be covered by each of one or more power supply sources different from the power system, based on the scheduled power usage amount and the power trading price. The one or more power supply sources include at least one of a private power generation device or a power storage device. According to the present disclosure, a breakdown of power supply is automatically determined.

In the above disclosure, the one or more power supply sources include a solar power generation device. The determination unit is configured to determine the scheduled power purchase amount and the partial amount of each of the one or more power supply sources, based on weather forecast information, the scheduled power usage amount, and the power trading price.

According to the present disclosure, the determination unit can accurately determine a partial amount corresponding to the solar power generation device, based on the weather forecast information.

In the above disclosure, the determination unit is configured to set a priority based on the power trading price, for each of a plurality of time slots included in a target period. The determination unit is configured to sequentially select the target time slot in accordance with the priority, from among the plurality of time slots. The determination unit is configured to determine the scheduled power purchase amount and the partial amount of each of the one or more power supply sources for the target time slot, so as not to affect the scheduled power purchase amount and the partial amount of each of the one or more power supply sources determined for a time slot having the priority higher than that of the target time slot, of the plurality of time slots.

According to the present disclosure, a breakdown of power supply in each time slot is determined in accordance with the priority determined based on the power trading price. Thereby, the determination unit can determine the breakdown of power supply such that the consumer can obtain a higher reward when cooperating on a request for a DR in a time slot in which the power trading price is advantageous for the consumer, for example.

In the above disclosure, the prediction system further includes a notification unit configured to notify an aggregator of notification data indicating information on the scheduled power purchase amount.

According to the present disclosure, the aggregator can easily adjust balance of demand and supply of power, based on the notification data.

In the above disclosure, the determination unit is configured to further determine, based on at least one of a first adjustable amount of the production plan or a second adjustable amount of power to be supplied from the one or more power supply sources, a third adjustable amount of the scheduled power purchase amount. The prediction system further includes a notification unit configured to notify an aggregator of notification data indicating information on the scheduled power purchase amount and the third adjustable amount.

According to the present disclosure, the aggregator can more easily adjust balance of demand and supply of power, based on the notification data.

In the above disclosure, the notification unit is configured to judge whether or not to notify the aggregator of the notification data, based on the power trading price.

According to the present disclosure, the prediction system does not notify the aggregator of the notification data, for a time slot in which the merit for the consumer is small, for example. As a result, the consumer can avoid cooperating on a request for a DR in a situation where the merit is small.

In the above disclosure, the prediction system further includes an output unit configured to output a power cost corresponding to the third adjustable amount.

According to the present disclosure, the consumer can grasp the magnitude of the merit obtained when cooperating on a request for a DR, by checking the power cost.

In the above disclosure, the determination unit is configured to periodically update the scheduled power purchase amount, based on the scheduled power usage amount calculated based on a latest production plan, a latest power trading price, and a latest situation of the one or more power supply sources.

According to the present disclosure, the determination unit can update the scheduled power purchase amount so as to be appropriate for the consumer, also in a current-day market.

In the above disclosure, the prediction system further includes an adjustment unit configured to adjust, when the one or more facilities respond to a request for a demand response from an aggregator, the scheduled power usage amount so as to satisfy the request. According to the present disclosure, the consumer can easily cooperate on a request for a DR.

In the above disclosure, the one or more facilities include a plurality of facilities. The prediction system further includes an adjustment unit configured to adjust the production plans of the plurality of facilities, in accordance with the power trading price.

According to the present disclosure, for example, the adjustment unit can decrease a scheduled production amount of a facility that belongs to a region in which the power trading price is relatively high. Thereby, the facility that belongs to the region in which the power trading price is relatively high can easily obtain a higher reward by cooperating on a request for a DR.

According to another example of the present disclosure, an aggregation system in communication with the prediction system described above includes a judgment unit configured to judge whether or not to request a demand response for each of the one or more facilities, based on the notification data and a scheduled power supply amount from the power system.

According to the present disclosure, the aggregation system can adjust balance of demand and supply of power, in consideration of the merit for the consumer obtained by cooperating on a request for a DR.

According to still another example of the present disclosure, a method for predicting power demand of a facility configured to produce a product includes: calculating, by a processor, for the facility, a scheduled power usage amount in a target time slot, based on actual result data of consumed power and a production plan of the product; and determining, by the processor, for the facility, a scheduled power purchase amount from a power system in the target time slot, based on the scheduled power usage amount and a power trading price in the target time slot.

According to still another example of the present disclosure, a program causes a computer to perform the method described above.

Also according to these disclosures, the method or the program can provide information capable of improving the merit for the consumer obtained by cooperating on a request for a DR.

ADVANTAGEOUS EFFECTS OF INVENTION

According to the present disclosure, the prediction system, the method, or the program can provide information capable of improving the merit for the consumer obtained by cooperating on a DR request. According to the present disclosure, the aggregation system can adjust balance of demand and supply of power in consideration of the merit for the consumer obtained by cooperating on a DR request.

BRIEF DESCRIPTION OF DRAWINGS

Fig. 1 is a diagram schematically illustrating an example of a power network including a prediction system according to an embodiment.
Fig. 2 is a schematic diagram showing an example of a hardware configuration of the prediction system.
Fig. 3 is a diagram showing an example of a functional configuration of the prediction system.
Fig. 4 is a diagram showing an example of a functional configuration of an aggregation system.
Fig. 5 is a flowchart showing an example of a flow of processing in the power network for power trading in a spot market.
Fig. 6 is a diagram showing transition of actual result values of a consumed power amount on a certain day.
Fig. 7 is a diagram showing an example of actual result data.
Fig. 8 is a flowchart showing a flow of processing of a subroutine in step S1.
Fig. 9 is a diagram illustrating processing in step S12.
Fig. 10 is a diagram showing an example of production plan data.
Fig. 11 is a diagram showing parameters used in step S2.
Fig. 12 is a flowchart showing a flow of processing of a subroutine in step S2.
Fig. 13 is a flowchart showing a flow of processing of a subroutine in step S26 shown in Fig. 12.
Fig. 14 is a flowchart showing a flow of processing of a subroutine in step S3.
Fig. 15 is a diagram illustrating processing in step S3.
Fig. 16 is a flowchart showing an example of a flow of processing in the power network for power trading in a current-day market.

DESCRIPTION OF EMBODIMENTS

An embodiment of the present invention will be described in detail with reference to the drawings. It should be noted that the same or corresponding parts in the drawings will be designated by the same reference numerals, and the description thereof will not be repeated.

§1 Application Example

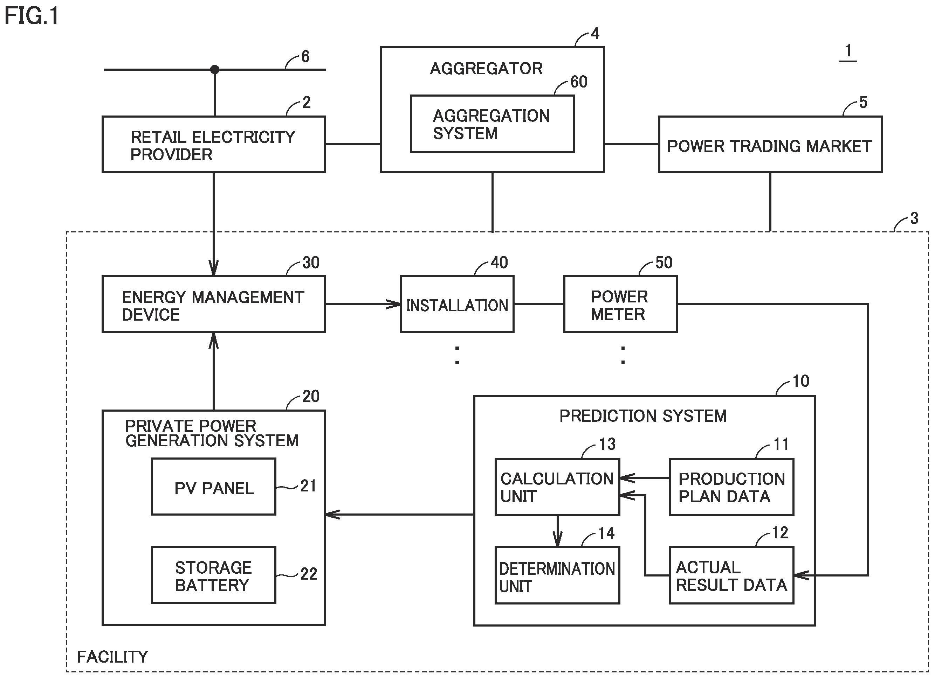

Fig. 1 is a diagram schematically illustrating an example of a power network including a prediction system according to the embodiment. As shown in Fig. 1, a power network 1 includes a retail electricity provider 2, one or more facilities 3, an aggregator 4, a power trading market 5, and a power system 6.

Retail electricity provider 2 is an organization for supplying power from electric power system 6 to consumers. Each of one or more facilities 3 is operated by a consumer, and produces a product using the power supplied from retail electricity provider 2.

Aggregator 4 is an intermediate business entity configured to aggregate energy resources owned by the consumers and stand between each consumer and a power company to adjust balance of demand and supply of power. Aggregator 4 has an aggregation system 60 configured to manages DR requests. Aggregation system 60 is constituted by one or more computers.

Power trading market 5 is an organization for trading power. For example, the Japan Electric Power eXchange (JEPX) is known as power trading market 5 in Japan. The Japan Electric Power eXchange determines a spot market price and a current-day market price. The spot market price and the current-day market price are examples of the "power trading price" in the present disclosure, and vary depending on a time slot. A spot market is a market for handling power trading for a next day, and is also referred to as a "day-ahead market". The spot market price is determined for each of 48 time slots in units of 30 minutes on the next day. Each time slot is also referred to as a frame. A current-day market is a market for dealing with a mismatch between demand and supply of power occurring in a period from the end of the spot market to one hour before actual demand and supply, and is also referred to as a "hour-ahead market". The current-day market price is determined for each time slot in units of 30 minutes on a current day.

Facility 3 has a prediction system 10, a private power generation system 20, an energy management device 30, one or more installations 40, and one or more power meters 50.

Private power generation system 20 performs solar power generation. Private power generation system 20 includes a PV (photovoltaic) panel 21 and a storage battery 22. PV panel 21 is a solar power generation device configured to convert solar energy into electric energy. PV panel 21 is an example of the "private power generation device" in the present disclosure. Power generated by PV panel 21 may be directly outputted from private power generation system 20, or may be temporarily stored in storage battery 22. A destination of output of the power generated by PV panel 21 (one or more installations 40 or storage battery 22) is controlled by prediction system 10. Storage battery 22 is charged or discharged in accordance with control by prediction system 10. Storage battery 22 is an example of the "power storage device" in the present disclosure.

Energy management device 30 manages power consumed in facility 3. The power consumed in facility 3 includes power purchased from retail electricity provider 2 (power supplied from electric power system 6) and power supplied from private power generation system 20. The power supplied from private power generation system 20 includes the power generated by PV panel 21 and power released from storage battery 22.

One or more installations 40 operate using supplied power. One or more installations 40 include a production installation directly involved in the production of the product, and an installation not directly involved in the production of the product (for example, a lighting fixture, an air conditioner, or the like).

One or more power meters 50 measure consumed power amounts consumed by one or more installations 40 for each time slot. Each power meter 50 measures a consumed power amount(s) of corresponding one or a plurality of installations 40. A total amount of the consumed power amounts measured by one or more power meters 50 represents a consumed power amount of facility 3.

Prediction system 10 predicts power demand of facility 3. Prediction system 10 is constituted by one or more computers. Prediction system 10 stores production plan data 11 and actual result data 12, and includes a calculation unit 13 and a determination unit 14.

Production plan data 11 indicates a production plan of the product in facility 3. Production plan data 11 is generated by, for example, a manager of facility 3 or the like, and is stored in prediction system 10.

Actual result data 12 indicates an actual result of consumed power of facility 3. Actual result data 12 is generated based on past measurement results measured by one or more power meters 50.

Calculation unit 13 calculates a scheduled power usage amount in a target time slot, based on actual result data 12 of the consumed power and the production plan of the product indicated by production plan data 11. For example, calculation unit 13 sequentially selects a target time slot for which a scheduled power usage amount is to be calculated, from among the 48 time slots on the next day, and calculates the scheduled power usage amount in the target time slot.

Determination unit 14 determines a scheduled power purchase amount from power system 6 in the target time slot, based on the scheduled power usage amount in the target time slot and a power trading price in the target time slot. Determination unit 14 utilizes, as the power trading price, the spot market price and the current-day market price provided from power trading market 5, for example.

A partial amount of the scheduled power usage amount that excludes the scheduled power purchase amount is covered by private power generation system 20. Prediction system 10 controls the destination of output of the power generated by PV panel 21 and charging and discharging of storage battery 22, such that the partial amount is supplied to one or more installations 40 in the target time slot.

According to the above configuration, the scheduled power purchase amount from power system 6 is determined based on the power trading price. Accordingly, the scheduled power purchase amount is determined in consideration of a merit (typically, a reward) for the consumer obtained by cooperating on a DR request. Thus, prediction system 10 can provide information capable of improving the merit for the consumer obtained by cooperating on a DR request.

Data related to the determined scheduled power purchase amount is notified to aggregator 4, for example. The scheduled power purchase amount is determined in accordance with the scheduled power usage amount accurately calculated based on the production plan. Thereby, aggregator 4 can appropriately adjust demand and supply of power.

§2 Specific Example

<Hardware Configuration of Prediction System and Aggregation System>

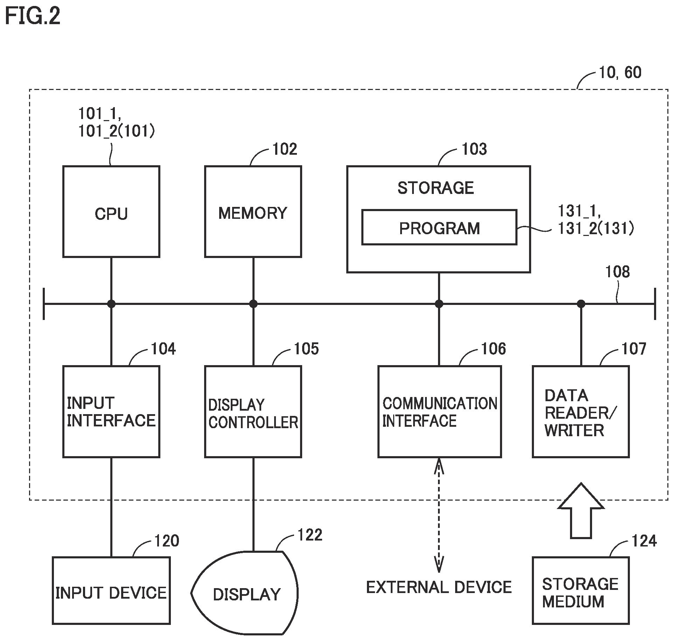

Fig. 2 is a schematic diagram showing an example of a hardware configuration of the prediction system. Fig. 2 shows a hardware configuration of the prediction system constituted by one computer. As shown in Fig. 2, prediction system 10 includes a central processing unit (CPU) 101 as an example of a hardware processor, a memory 102 constituted by a volatile storage device such as a dynamic random access memory (DRAM), a storage 103 constituted by a nonvolatile storage device, an input interface 104, a display controller 105, a communication interface 106, and a data reader/writer 107. These components are connected so as to be capable of communicating data with each other via a bus 108.

CPU 101 reads a program 131 stored in storage 103, and loads it into memory 102. CPU 101 executes loaded program 131.

Storage 103 includes a hard disk drive (HDD), a solid state drive (SSD), a flash memory, or the like, for example. Storage 103 stores, in addition to program 131, various types of data used for executing program 131.

Input interface 104 mediates data transmission between CPU 101 and an input device 120 such as a keyboard, a mouse, or a touch panel. That is, input interface 104 receives data indicating various types of user inputs from input device 120, and transmits the received data to CPU 101. Display controller 105 is connected to a display 122, and displays a result of processing in CPU 101 and the like on display 122. Communication interface 106 communicates with an external device. Data reader/writer 107 mediates data transmission between CPU 101 and an external storage medium 124. Storage medium 124 includes a general-purpose semiconductor storage device such as a volatile storage medium, a nonvolatile storage medium, a compact flash (CF), or a secure digital (SD), a magnetic storage medium such as a flexible disk, or an optical storage medium such as a compact disk read only memory (CD-ROM).

Program 131 may be provided by being incorporated into a part of an arbitrary program, instead of being provided as a single program. In this case, processing according to the present embodiment is implemented in cooperation with the arbitrary program. Further, some or all of functions provided by program 131 may be implemented by dedicated hardware circuitry (for example, an application specific integrated circuit (ASIC) or a field-programmable gate array (FPGA)).

Aggregation system 60 also has the hardware configuration shown in Fig. 2. Hereinafter, CPU 101 included in prediction system 10 is referred to as a "CPU 101_1", and CPU 101 included in aggregation system 60 is referred to as a "CPU 101_2". Program 131 included in prediction system 10 is referred to as a "program 131_1", and program 131 included in aggregation system 60 is referred to as a "program 131_2".

<Functional Configuration of Prediction System>

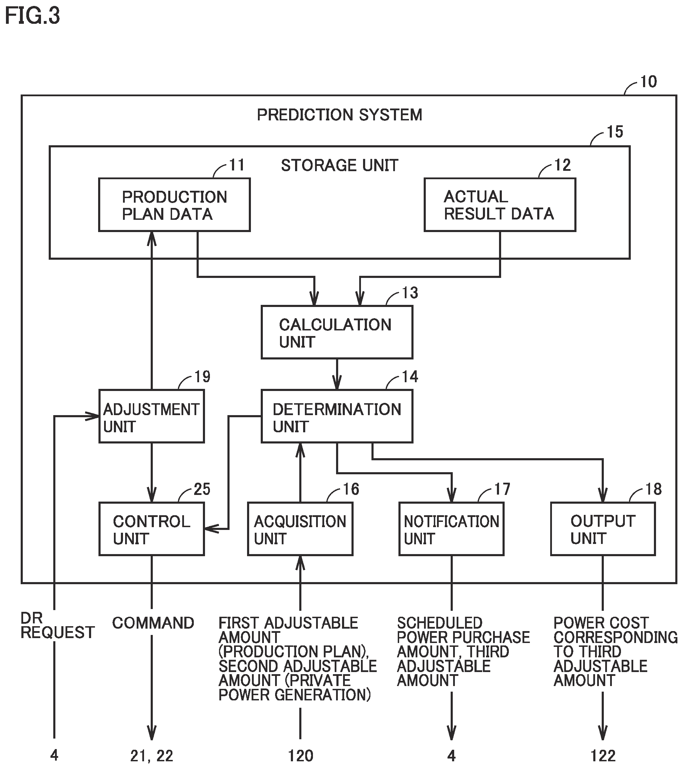

Fig. 3 is a diagram showing an example of a functional configuration of the prediction system. As shown in Fig. 3, prediction system 10 includes calculation unit 13, determination unit 14, a storage unit 15, an acquisition unit 16, a notification unit 17, an output unit 18, an adjustment unit 19, and a control unit 25.

Calculation unit 13 and determination unit 14 are implemented by CPU 101_1 shown in Fig. 2 executing program 131_1. Notification unit 17, adjustment unit 19, and control unit 25 are implemented by CPU 101_1 that executes program 131_1, and communication interface 106. Acquisition unit 16 is implemented by CPU 101_1 that executes program 131_1, and input interface 104. Output unit 18 is implemented by CPU 101_1 that executes program 131_1, and display controller 105.

Storage unit 15 is implemented by memory 102 or storage 103 (see Fig. 2) included in prediction system 10. Storage unit 15 stores production plan data 11 and actual result data 12.

As described above, calculation unit 13 calculates the scheduled power usage amount in the target time slot, based on actual result data 12 and production plan data 11. For example, calculation unit 13 sequentially selects a target time slot from among the 48 time slots on the next day, and calculates a scheduled power usage amount in each of the 48 time slots. Alternatively, calculation unit 13 sequentially selects a target time slot, from one or more time slots up to 24 o'clock on the current day, and calculates a scheduled power usage amount in each of the one or more time slots.

As described above, determination unit 14 determines the scheduled power purchase amount from power system 6 in the target time slot, based on the scheduled power usage amount in the target time slot and the power trading price in the target time slot. Furthermore, determination unit 14 further determines a partial amount of the scheduled power usage amount to be covered by each of one or more power supply sources different from power system 6, based on the scheduled power usage amount and the power trading price. In the present embodiment, the one or more power supply sources different from power system 6 include PV panel 21 and storage battery 22. That is, determination unit 14 determines a partial amount to be supplied from PV panel 21 and a partial amount to be supplied from storage battery 22, of the scheduled power usage amount. In this manner, determination unit 14 determines partial amounts (a breakdown) to be supplied from power system 6, PV panel 21, and storage battery 22, for the scheduled power usage amount calculated by calculation unit 13.

The amount of power generated by PV panel 21 depends on weather conditions. Accordingly, determination unit 14 determines the partial amounts (breakdown) to be supplied from power system 6, PV panel 21, and storage battery 22, for the scheduled power usage amount, based on weather forecast information, the scheduled power usage amount, and the power trading price. The weather forecast information is acquired from a weather forecast service (not shown) via a communication network.

The power trading price varies for each time slot. Accordingly, determination unit 14 sets a priority based on the power trading price, for each of one or more time slots in units of 30 minutes in a target period (for example, the next day, or a period up to 24 o'clock on the current day). Then, determination unit 14 sequentially selects a target time slot in accordance with the priority, from among the one or more time slots. Determination unit 14 determines the scheduled power purchase amount and the partial amount to be covered by each of PV panel 21 and storage battery 22 for the target time slot, so as not to affect a scheduled power purchase amount and a partial amount to be covered by each of PV panel 21 and storage battery 22 determined for a time slot having a priority higher than that of the target time slot, of the one or more time slots.

Determination unit 14 outputs, to control unit 25, a partial amount to be covered by each of PV panel 21 and storage battery 22, determined for each time slot.

Aggregator 4 can easily adjust balance of demand and supply of power, by knowing a variation range of a scheduled power purchase amount to be purchased by each consumer. Accordingly, determination unit 14 may further determine an adjustable amount of the scheduled power purchase amount. Specifically, determination unit 14 determines, based on at least one of an adjustable amount (hereinafter referred to as a "first adjustable amount") of the production plan or an adjustable amount (hereinafter referred to as a "second adjustable amount") of power to be supplied from private power generation system 20, an adjustable amount (hereinafter referred to as a "third adjustable amount") of the scheduled power purchase amount. The second adjustable amount includes an adjustable amount (hereinafter referred to as a "fourth adjustable amount") of power to be supplied from PV panel 21, and an adjustable amount (hereinafter referred to as a "fifth adjustable amount") of power to be supplied from storage battery 22.

Acquisition unit 16 acquires the first adjustable amount, the fourth adjustable amount, and the fifth adjustable amount. For example, a scheduled production amount of the product indicated by the production plan may have a variation range depending on an ordered amount, a stock amount, or the like. Accordingly, acquisition unit 16 acquires the variation range of the scheduled production amount inputted to input device 120, as the first adjustable amount.

It is conceivable that a designated ratio of the amount of power generated by PV panel 21 is set to be utilized for charging storage battery 22. In this case, the amount of power that can be supplied from PV panel 21 to one or more installations 40 can be adjusted by changing the designated ratio. Accordingly, acquisition unit 16 acquires the fourth adjustable amount based on an adjustment range of the designated ratio inputted to input device 120.

Storage battery 22 is usually controlled such that a remaining power storage amount does not fall below a predetermined lower limit amount. The amount of power that can be supplied from storage battery 22 to one or more installations 40 can be adjusted by changing the lower limit amount. Accordingly, acquisition unit 16 acquires the fifth adjustable amount based on an adjustment range of the lower limit amount inputted to input device 120.

Determination unit 14 determines the third adjustable amount, based on the first adjustable amount, the fourth adjustable amount, and the fifth adjustable amount acquired by acquisition unit 16.

Notification unit 17 notifies aggregator 4 of notification data indicating information on a scheduled power purchase amount determined by determination unit 14, for a time slot included in a period in which a DR request is acceptable. Thereby, aggregator 4 can easily adjust balance of demand and supply of power, based on the notification data. The information on the scheduled power purchase amount includes at least one of the scheduled power purchase amount, a ratio of the scheduled power purchase amount to contracted power, a difference between the contracted power and the scheduled power purchase amount, or a ratio of the difference to the contracted power, for example. It should be noted that the contracted power is maximum demand power having the largest value, of maximum demand powers in months of a past one year including a current month. The maximum demand power is average power having the largest value in a month, of average powers for each 30 minutes.

Notification unit 17 may judge, for each time slot, whether or not to notify aggregator 4 of the notification data, based on the power trading price.

A demand response (DR) includes an increase DR and a decrease DR. The increase DR is invoked to increase the amount of demand when the amount of supply of power is excessive relative to the amount of demand. Thereby, an excessively outputted portion of renewable energy such as solar power is effectively utilized to operate the installation or charge the power storage device. The decrease DR is invoked to decrease the amount of demand when the amount of supply of power is insufficient relative to the amount of demand.

In a case where the consumer receives a request for an increase DR when the power trading price is relatively high, the merit for the consumer is small. Accordingly, notification unit 17 judges not to notify aggregator 4 of the notification data, for a time slot in which the power trading price is equal to or more than a predetermined first threshold value, in a period in which an increase DR is expected to be invoked. The period in which an increase DR is expected to be invoked is determined based on, for example, the environment (such as weather, season, temperature, and day of the week) of periods in which past increase DRs were invoked.

In a case where the consumer receives a request for a decrease DR when the power trading price is relatively low, the merit for the consumer is small. Further, once the consumer cooperates on a decrease DR, the consumer cannot deal with a sudden increase in production. Alternatively, in a case where adjustment such as review of the production plan is required when the consumer cooperates on a decrease DR, there may be a demerit that it takes time and effort for the consumer to perform adjustment. Accordingly, notification unit 17 judges not to notify aggregator 4 of the notification data, for a time slot in which the power trading price is equal to or less than a predetermined second threshold value, in a period in which a decrease DR is expected to be invoked. The period in which a decrease DR is expected to be invoked is determined based on, for example, the environment (such as weather, season, temperature, and day of the week) of periods in which past decrease DRs were invoked.

The notification data may indicate the third adjustable amount, in addition to the information on the scheduled power purchase amount. Thereby, aggregator 4 can more easily adjust balance of demand and supply of power, based on the third adjustable amount.

Output unit 18 outputs a power cost corresponding to the third adjustable amount. The power cost corresponding to the third adjustable amount is the amount of reward to be received when facility 3 responds to a DR request by the third adjustable amount. The method of calculating the amount of reward depends on a contract between aggregator 4 and the consumer. Accordingly, output unit 18 calculates the power cost according to the calculation method in accordance with contents of the contract. For example, output unit 18 calculates the product of the third adjustable amount and the power trading price, as the power cost. Output unit 18 displays the calculated power cost on display 122. Thereby, the consumer can check the amount of reward to be received when facility 3 responds to the DR request by the third adjustable amount.

When facility 3 responds to a DR request from aggregator 4, adjustment unit 19 adjusts the scheduled power usage amount so as to satisfy the DR request.
Adjustment unit 19 may judge whether or not to respond to the DR request from aggregator 4, in accordance with a user input. Alternatively, when a DR request is received for a time slot for which the notification data is notified to aggregator 4, adjustment unit 19 may automatically judge to respond to the DR request.

Based on contents of the DR request, adjustment unit 19 judges whether or not adjustment of the scheduled power usage amount is necessary. For example, when a request for a decrease DR (request for power saving) is received from aggregator 4, adjustment unit 19 judges whether or not the relation among a requested power saving amount, the scheduled power purchase amount, and the contracted power satisfies the following expression:

Contracted Power $\geq$ Scheduled Power Purchase Amount + Requested Power Saving Amount + Constant.

It should be noted that the constant is predetermined in consideration of a margin. When the above expression is satisfied, adjustment unit 19 judges that adjustment of the scheduled power usage amount is unnecessary. That is, when the above expression is not satisfied, adjustment unit 19 judges that adjustment of the scheduled power usage amount is necessary. For example, aggregator 4 may make a DR request indicating to change the amount of demand including the third adjustable amount. Specifically, aggregator 4 may request a power saving amount larger than the difference between the scheduled power purchase amount indicated by the notification data and the contracted power. In this case, adjustment unit 19 judges that adjustment of the scheduled power usage amount is necessary, and adjusts the scheduled power usage amount by correcting the scheduled production amount within the range of the first adjustable amount.

Alternatively, adjustment unit 19 may decrease a power purchase amount from power system 6, by adjusting the amount of power to be supplied from PV panel 21 to one or more installations 40 within the range of the fourth adjustable amount. That is, adjustment unit 19 may adjust the partial amount of the scheduled power usage amount to be covered by PV panel 21, instead of the scheduled power usage amount. Similarly, adjustment unit 19 may decrease the power purchase amount from power system 6, by adjusting the amount of power to be supplied from storage battery 22 to one or more installations 40 within the range of the fifth adjustable amount. That is, adjustment unit 19 may adjust the partial amount of the scheduled power usage amount to be covered by storage battery 22, instead of the scheduled power usage amount.

When adjustment unit 19 adjusts the partial amounts to be covered by PV panel 21 and storage battery 22 for each time slot, adjustment unit 19 outputs the adjusted partial amounts to control unit 25.

Control unit 25 receives, from determination unit 14, the partial amounts of the scheduled power usage amount to be covered by PV panel 21 and storage battery 22, for each time slot. Further, when the partial amounts are adjusted by adjustment unit 19, control unit 25 receives the adjusted partial amounts from adjustment unit 19. Control unit 25 controls, for each time slot, the destination of output of the power generated by PV panel 21 and charging and discharging of storage battery 22, such that the corresponding partial amounts are supplied to one or more installations 40.

<Functional Configuration of Aggregation System>

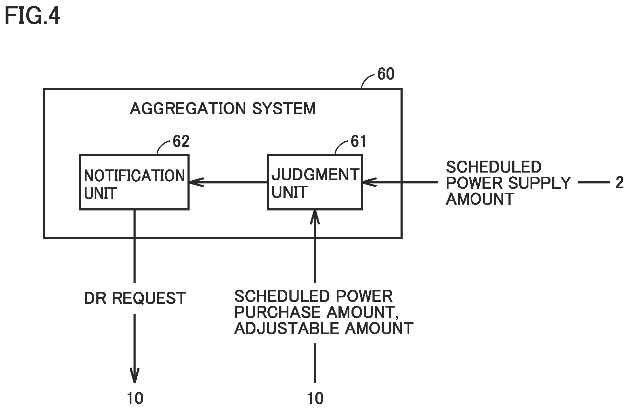

Fig. 4 is a diagram showing an example of a functional configuration of the aggregation system. As shown in Fig. 4, aggregation system 60 includes a judgment unit 61 and a notification unit 62. Judgment unit 61 and notification unit 62 are implemented by CPU 101_2 that executes program 131_2 shown in Fig. 2, and communication interface 106.

Judgment unit 61 judges whether or not to notify each facility 3 of a DR request, based on notification data received from each facility 3 and a scheduled power supply amount from power system 6. The scheduled power supply amount is notified from retail electricity provider 2 to aggregator 4.

Specifically, judgment unit 61 judges whether or not to request a DR, in accordance with whether the scheduled power supply amount is excessive or insufficient with respect to a maximum demand amount. The maximum demand amount is determined based on a total amount of contracted powers of the consumers.

When the scheduled power supply amount is insufficient with respect to the maximum demand amount, judgment unit 61 judges that a request for a decrease DR is necessary. Based on the notification data received from each facility 3, judgment unit 61 judges whether or not a decrease DR can be requested to that facility 3. For example, when the difference between the contracted power and the scheduled power purchase amount exceeds a predetermined third threshold value, judgment unit 61 judges that a decrease DR can be requested. Based on an insufficient portion of the scheduled power supply amount with respect to the maximum demand amount, judgment unit 61 determines a power saving amount to be requested to each facility 3 to which judgment unit 61 judges that a decrease DR can be requested. The power saving amount to be requested is determined so as to be equal to or less than the difference between the contracted power and the scheduled power purchase amount. Alternatively, when the notification data indicates the third adjustable amount, judgment unit 61 may adjust the scheduled power purchase amount by the third adjustable amount, and determine the power saving amount to be requested so as to be equal to or less than a difference between the contracted power and the adjusted scheduled power purchase amount.

When the scheduled power supply amount is excessive with respect to the maximum demand amount, judgment unit 61 judges that a request for an increase DR is necessary. Based on the notification data received from each facility 3, judgment unit 61 judges whether or not an increase DR can be requested to that facility 3. Specifically, judgment unit 61 judges whether or not an increase DR can be requested, based on the third adjustable amount indicated by the notification data. Based on an excessive portion of the scheduled power supply amount with respect to the maximum demand amount, judgment unit 61 determines a demand increase amount to be requested to each facility 3 to which judgment unit 61 judges that an increase DR can be requested. The demand increase amount to be requested is determined so as to be equal to or less than an additionally purchasable amount, which will be described later, of the third adjustable amount.

Notification unit 62 notifies prediction system 10 of facility 3 to which it is judged that a DR can be requested, of a DR request.

<Processing in Power Network for Power Trading in Spot Market>

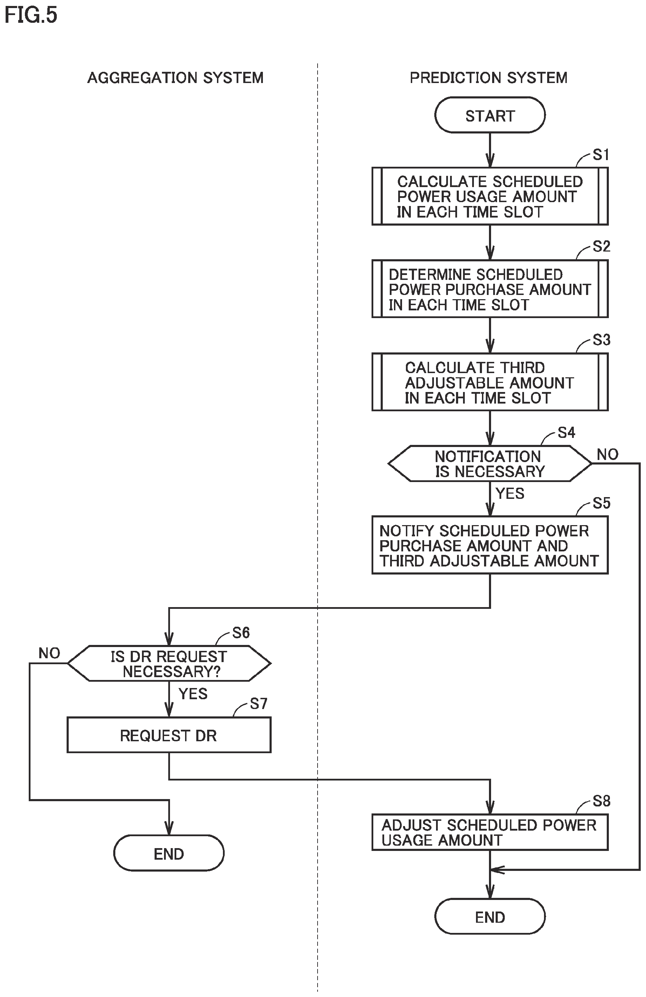

Fig. 5 is a flowchart showing an example of a flow of processing in the power network for power trading in the spot market.

First, in step S1, CPU 101_1 of prediction system 10 calculates a scheduled power usage amount in each time slot in units of 30 minutes on the next day, based on actual result data 12 of the consumed power of facility 3 and the production plan of the product.

In the next step S2, CPU 101_1 determines, for each time slot, a scheduled power purchase amount from power system 6, based on the scheduled power usage amount and the power trading price (spot market price).

In the next step S3, CPU 101_1 calculates, for each time slot, the third adjustable amount of the scheduled power purchase amount, based on the first adjustable amount of the production plan and the second adjustable amount (the fourth adjustable amount and the fifth adjustable amount) of the power to be supplied from private power generation system 20. In step S3, CPU 101_1 may calculate a power cost corresponding to the third adjustable amount based on the power trading price (spot market price), and display the power cost on display 122.

In the next step S4, CPU 101_1 judges whether or not there is a time slot in which notification to aggregator 4 is necessary, based on the power trading price.

When there is a time slot for which notification to aggregator 4 is judged to be necessary (YES in step S4), in step S5, CPU 101_1 generates, for the time slot, notification data indicating information on the scheduled power purchase amount and the third adjustable amount, and notifies aggregator 4 of the notification data.

When there is no time slot for which notification to aggregator 4 is judged to be necessary (NO in step S4), the processing ends.

In step S6 after step S5, CPU 101_2 of aggregation system 60 judges whether or not there is a time slot for which a DR request is necessary, from whether a scheduled power supply amount from power system 6 is excessive or insufficient with respect to a maximum demand amount.

When there is a time slot for which a DR request is necessary (YES in step S6), in step S7, CPU 101_2 notifies prediction system 10 that has transmitted the notification data for the time slot, of a DR request. In the case of a decrease DR, CPU 101_2 notifies a power saving amount to be requested. In the case of an increase DR, CPU 101_2 notifies a demand increase amount to be requested. When there is no time slot for which a DR request is necessary (NO in step S6), the processing ends.

In step S8 after step S7, CPU 101_1 of prediction system 10 that has received the DR request adjusts the scheduled power usage amount so as to satisfy contents of the DR request. Alternatively, CPU 101_1 may adjust partial amounts of the scheduled power usage amount to be covered by PV panel 21 and storage battery 22 so as to satisfy the contents of the DR request. After step S8, the processing ends.

<Details of Step S1>

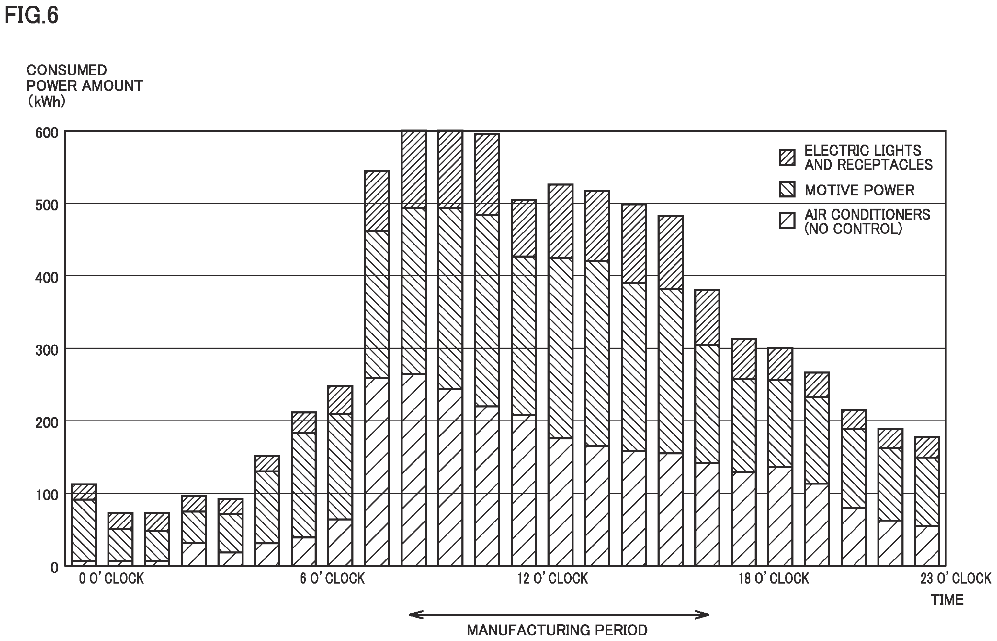

Details of step S1 will be described with reference to Figs. 6 to 10. Fig. 6 is a diagram showing transition of actual result values of the consumed power amount on a certain day. Fig. 6 shows a breakdown of a consumed power amount consumed by production installations, a consumed power amount consumed by air conditioners, and a consumed power amount consumed by other installations (such as lighting fixtures), in each time slot in units of one hour. The manufacturing period is from 9:00 to 17:30.

As shown in Fig. 6, in the manufacturing period, the consumed power amount of the production installations increases. Further, since the amount of heat generated from the production installations increases in the manufacturing period, the consumed power amount consumed by the air conditioners also increases.

In a period other than the manufacturing period, the consumed power amount of the production installations is not 0. This is because standby power is consumed in the production installations, even in the period other than the manufacturing period. Further, immediately before the start of the manufacturing period, a large amount of power is consumed in the production installations for start-up. Further, the consumed power amounts consumed by the air conditioners and other installations are also not 0.

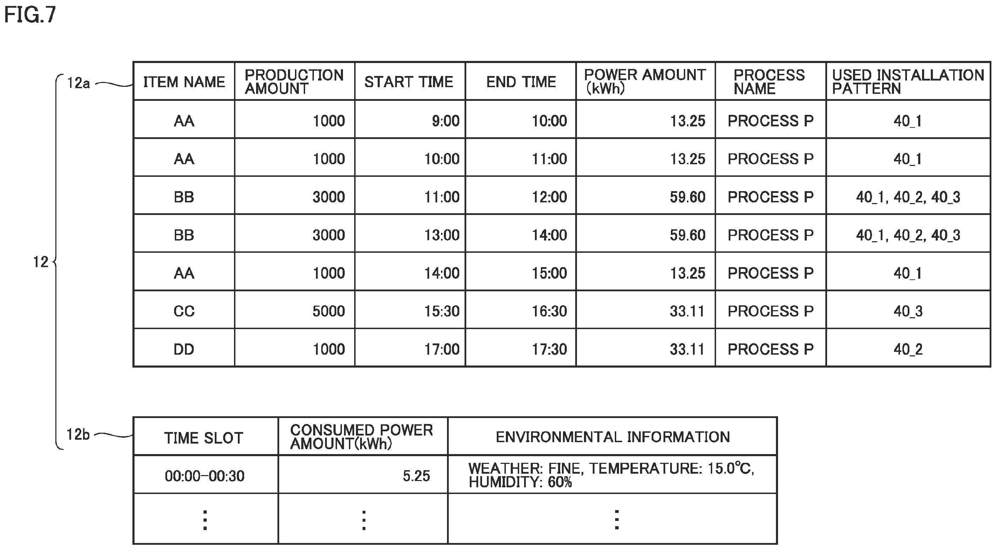

Fig. 7 is a diagram showing an example of the actual result data. Fig. 7 shows actual result data 12 indicating an actual result of consumed power on a certain day. As shown in Fig. 7, actual result data 12 includes actual result data 12a in the manufacturing period in which the product is produced, and actual result data 12b in the period other than the manufacturing period.

Actual result data 12a indicates, for each product lot, an item name, a production amount, a scheduled production start time, a scheduled production end time, a consumed power amount during the manufacturing period, a process name, and a used installation pattern. As shown, the used installation pattern may differ depending on an item. Accordingly, the consumed power amount may vary depending on the item. Furthermore, the consumed power amount may also vary depending on the production amount.

Actual result data 12b indicates, for each time slot, a consumed power amount and environmental information. The environmental information indicates, for example, weather, temperature, humidity, and the like. In the period other than the manufacturing period, a power amount for a fixed portion that does not directly contribute to the production of the product is consumed. However, the consumed power amount in the period other than the manufacturing period may vary depending on the environment.

Thus, a total amount of the consumed power amount of facility 3 includes a varying portion that varies depending on production conditions of the product, and the fixed portion that does not vary depending on the production conditions of the product. Accordingly, CPU 101_1 of prediction system 10 calculates the scheduled power usage amount in each time slot using actual result data 12 and the production plan of the product, in consideration of the varying portion and the fixed portion.

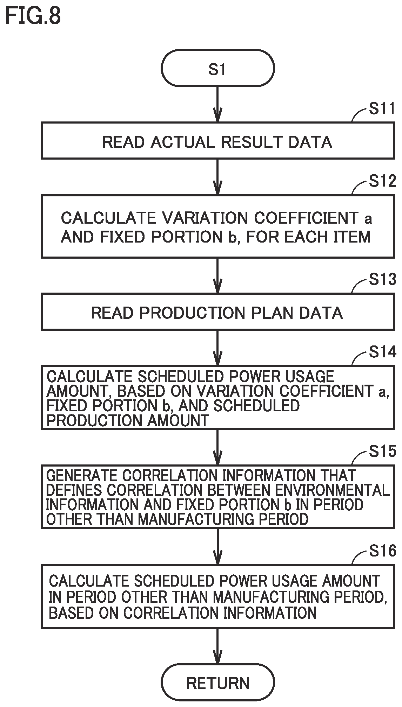

Fig. 8 is a flowchart showing a flow of processing of a subroutine in step S1. First, in step S11, CPU 101_1 of prediction system 10 reads actual result data 12. As described above, actual result data 12 includes actual result data 12a in the manufacturing period, and actual result data 12b in the period other than the manufacturing period.

In the next step S12, CPU 101_1 calculates, for each item of the product, a "variation coefficient a" and a "fixed portion b", using actual result data 12a.

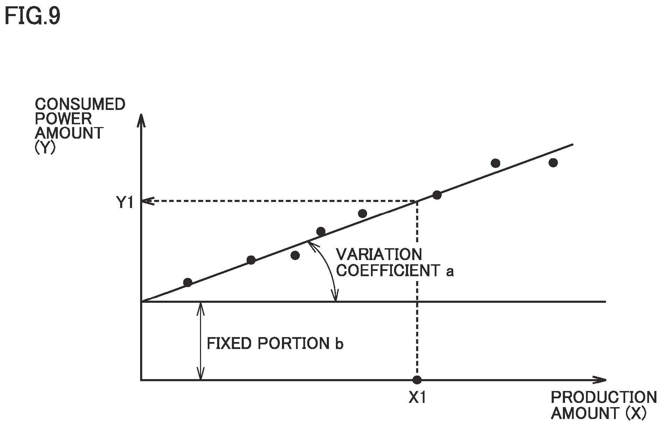

Fig. 9 is a diagram illustrating processing in step S12. CPU 101_1 extracts, for each item of the product, data of a manufacturing lot of the item, from actual result data 12a. CPU 101_1 specifies a linear function indicating the relation between a production amount (X) and a consumed power amount (Y) indicated by the extracted data. CPU 101_1 determines a slope of the linear function as "variation coefficient a", and determines a Y intercept of the linear function as "fixed portion b".

Returning to Fig. 8, in the next step S13, CPU 101_1 reads production plan data 11 indicating a production plan on the next day.

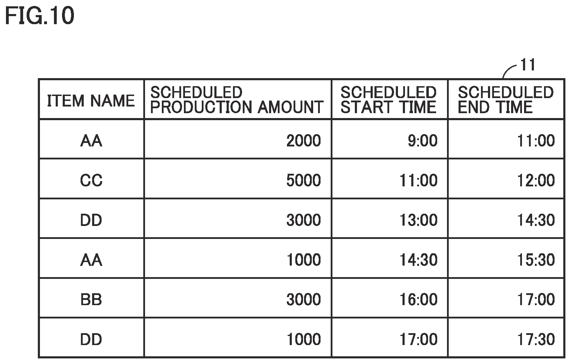

Fig. 10 is a diagram showing an example of the production plan data. As shown in Fig. 10, production plan data 11 indicates a production schedule of product lots, and indicates, for each product lot, an item name, a scheduled production amount, a scheduled production start time, and a scheduled production end time.

Returning to Fig. 8, in the next step S14, CPU 101_1 calculates a scheduled power usage amount $(\alpha)$ in each time slot in units of 30 minutes in the period in which the product is produced (manufacturing period), using production plan data 11 and "variation coefficient a" and "fixed portion b" for each item.

Specifically, CPU 101_1 calculates, for each product lot, a scheduled power usage amount $(Y1 = a \times X1 + b)$ in a period from the scheduled production start time to the scheduled production end time, based on "variation coefficient a" and "fixed portion b" corresponding to an item of the product lot, and a scheduled production amount $(X1)$ of the product lot. CPU 101_1 calculates the scheduled power usage amount $(\alpha)$ in each time slot in units of 30 minutes in the manufacturing period, by integrating or dividing the scheduled power usage amount (Y1) for each product lot. For example, CPU 101_1 divides a scheduled power usage amount (Y1) in a period from a scheduled production start time at 9:00 to a scheduled production end time at 10:00, into a scheduled power usage amount (α) in a time slot from 9:00 to 9:30 and a scheduled power usage amount (α) in a time slot from 9:30 to 10:00. CPU 101_1 may divide the scheduled power usage amount, using a known interpolation method.

In the next step S15, CPU 101_1 generates correlation information that defines the correlation between the environmental information and fixed portion b in the period other than the manufacturing period, using actual result data 12b. The correlation information is typically a table or a trained model. For example, CPU 101_1 may perform machine learning using, as training data, a pair of the environmental information and the consumed power amount in each time slot indicated by actual result data 12b, to generate a trained model that receives an input of the environmental information and outputs the consumed power amount.

In the next step S16, CPU 101_1 calculates a scheduled power usage amount in each time slot in the period other than the manufacturing period on the next day, using the correlation information. For example, CPU 101_1 acquires weather forecast information for each time slot from a weather forecast center, inputs the weather forecast information to the correlation information, as environmental information expected in the time slot, and thereby calculates a scheduled power usage amount in the time slot. After step S16, step S1 ends.

It should be noted that "variation coefficient a" and "fixed portion b" for each item do not vary every day. Accordingly, steps S11 and S12 may be performed only at regular timing (for example, for each season). Similarly, the correlation information that defines the correlation between the environmental information and fixed portion b in the period other than the manufacturing period does not vary every day. Accordingly, step S15 may be performed only at regular timing (for example, for each season).

<Details of Step S2>

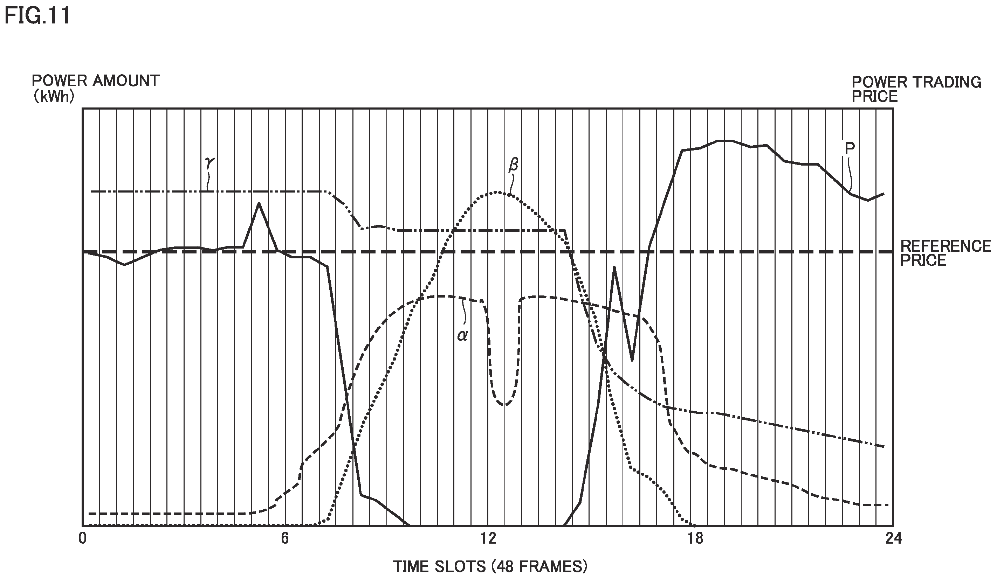

Details of step S2 will be described with reference to Figs. 11 to 13. Fig. 11 is a diagram showing parameters used in step S2. As shown in Fig. 11, CPU 101_1 uses the scheduled power usage amount (α), a predicted power generation amount (β) of PV panel 21, a remaining amount of storage battery 22 (hereinafter referred to as a "remaining power storage amount (γ)"), and a power trading price (P), for step S2. Furthermore, CPU 101_1 uses a predetermined reference price, for step S2.

CPU 101_1 may use any of the following values (a) to (e), as the reference price.

A value (a) is a median value of power trading prices in the 48 time slots on a previous day.

A value (b) is an average value of power trading prices in a specific time zone on the previous day. It should be noted that the specific time zone is determined based on transition of past power trading prices, and includes a plurality of continuous time slots in which variation of power trading prices is small.

A value (c) is a moving average value (weekly, monthly, quarterly, or yearly) obtained from the past power trading prices.

A value (d) is an average value (weekly, monthly, quarterly, or yearly) obtained from the past power trading prices.

A value (e) is a value inputted by a user. The user may view transition of power trading prices, and input an appropriate value for the consumer.

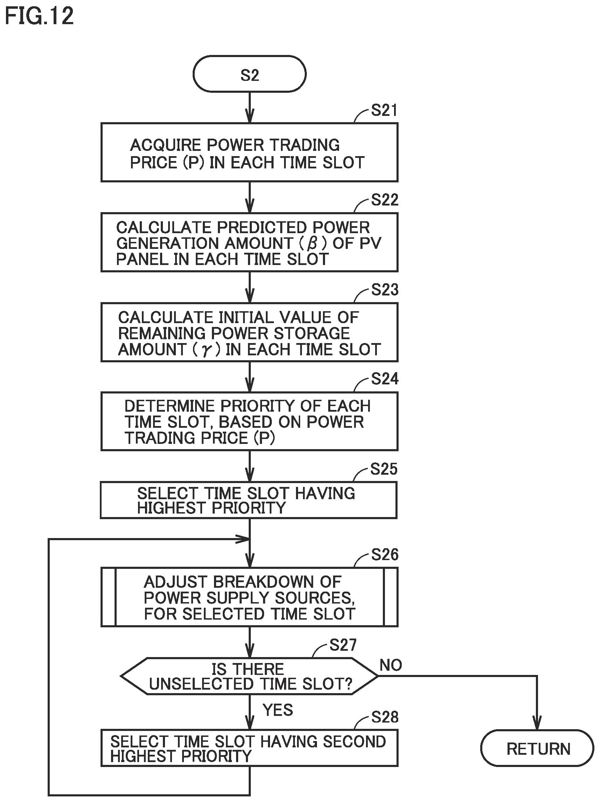

Fig. 12 is a flowchart showing a flow of processing of a subroutine in step S2. First, in step S21, CPU 101_1 of prediction system 10 acquires the power trading price (P) (spot market price) in each time slot on the next day, from power trading market 5.

In the next step S22, CPU 101_1 acquires weather forecast information for each time slot on the next day from the weather forecast service, and calculates a predicted power generation amount (β) of PV panel 21 in each time slot based on the weather forecast information.

In the next step S23, CPU 101_1 calculates an initial value of a remaining power storage amount (γ) in each time slot on the next day. Specifically, CPU 101_1 calculates the initial value of the remaining power storage amount (γ) in each time slot, based on the following temporary conditions.

(Temporary Conditions)

- A remaining power storage amount (γ) in the first time slot (0:00 to 0:30) matches a remaining power storage amount (γ) in the last time slot (23:30 to 24:00) on the previous day.
- All of the scheduled power usage amount (α) is covered by the power purchase amount from power system 6.
- The predicted power generation amount (β) of PV panel 21 is used to charge storage battery 22.

In the next step S24, CPU 101_1 sets a priority of each time slot, based on the power trading price (P). Specifically, CPU 101_1 sets the priority to be higher as the power trading price (P) is higher.

In the next step S25, CPU 101_1 selects a time slot having the highest priority.

Next, in step S26, CPU 101_1 adjusts, for the selected time slot, a breakdown of the power supply sources (power system 6, PV panel 21, and storage battery 22) that cover the scheduled power usage amount.

In the next step S27, CPU 101_1 judges whether there is an unselected time slot. When there is an unselected time slot (YES in step S27), in step S28, CPU 101_1 selects a time slot having the second highest priority. After step S28, the processing returns to step S26. When there is no unselected time slot (NO in step S27), step S2 ends.

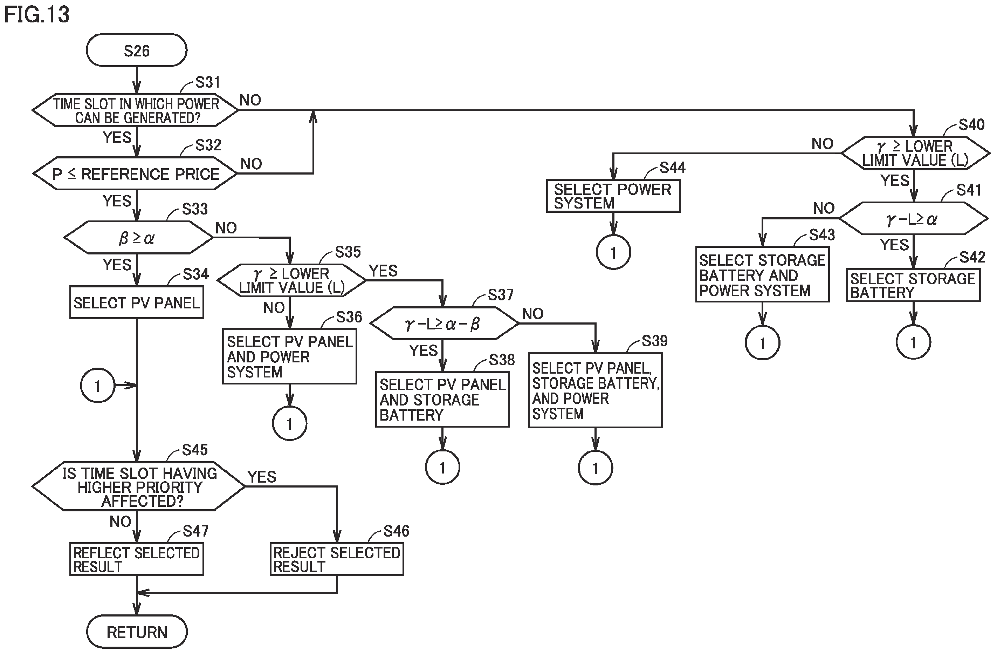

Fig. 13 is a flowchart showing a flow of processing of a subroutine in step S26 shown in Fig. 12.

First, in step S31, CPU 101_1 judges whether or not the selected time slot is a time slot in which PV panel 21 can generate power. Specifically, CPU 101_1 may judge whether or not a predicted power generation amount ($\beta$) of PV panel 21 in the selected time slot exceeds 0.

In the case of YES in step S31, in step S32, CPU 101_1 judges whether or not a power trading price (P) in the selected time slot is equal to or less than the predetermined reference price.

In the case of YES in step S32, in step S33, CPU 101_1 judges whether or not the predicted power generation amount ($\beta$) of PV panel 21 in the selected time slot is equal to or more than a scheduled power usage amount ($\alpha$) in the selected time slot.

In the case of YES in step S33, in step S34, CPU 101_1 selects PV panel 21 as a candidate for a supply source of all of the scheduled power usage amount ($\alpha$) in the selected time slot.

In the case of NO in step S33, in step S35, CPU 101_1 judges whether or not a remaining power storage amount ($\gamma$) in the selected time slot is equal to or more than a predetermined lower limit value (L).

In the case of NO in step S35, in step S36, CPU 101_1 selects PV panel 21 and power system 6 as candidates for the supply source of the scheduled power usage amount ($\alpha$) in the selected time slot. CPU 101_1 sets a candidate for a partial amount of the scheduled power usage amount ($\alpha$) to be covered by PV panel 21, as the predicted power generation amount ($\beta$), and sets a candidate for a partial amount of the scheduled power usage amount ($\alpha$) to be covered by power system 6, as ($\alpha$-$\beta$).

In the case of YES in step S35, in step S37, CPU 101_1 judges whether or not ($\gamma$-L) $\geq$ ($\alpha$-$\beta$) is satisfied.

In the case of YES in step S37, in step S38, CPU 101_1 selects PV panel 21 and storage battery 22 as candidates for the supply source of the scheduled power usage amount ($\alpha$) in the selected time slot. CPU 101_1 sets a candidate for a partial amount of the scheduled power usage amount ($\alpha$) to be covered by PV panel 21, as the predicted power generation amount ($\beta$), and sets a candidate for a partial amount of the scheduled power usage amount ($\alpha$) to be covered by storage battery 22, as ($\alpha$-$\beta$).

In the case of NO in step S37, in step S39, CPU 101_1 selects PV panel 21, storage battery 22, and power system 6 as candidates for the supply source of the scheduled power usage amount ($\alpha$) in the selected time slot. CPU 101_1 sets a candidate for a partial amount of the scheduled power usage amount ($\alpha$) to be covered by PV panel 21, as the predicted power generation amount ($\beta$), sets a candidate for a partial amount of the scheduled power usage amount ($\alpha$) to be covered by storage battery 22, as ($\gamma$-L), and sets a candidate for a partial amount of the scheduled power usage amount ($\alpha$) to be covered by power system 6, as ($\alpha$-$\beta$-($\gamma$-L)).

In the case of NO in step S31 or step S32, in step S40, CPU 101_1 judges whether or not the remaining power storage amount ($\gamma$) in the selected time slot is equal to or more than the predetermined lower limit value (L).

In the case of YES in step S40, in step S41, CPU 101_1 judges whether or not ($\gamma$-L) $\geq$ $\alpha$ is satisfied.

In the case of YES in step S41, in step S42, CPU 101_1 selects storage battery 22 as a candidate for the supply source of all of the scheduled power usage amount ($\alpha$) in the selected time slot.

In the case of NO in step S41, in step S43, CPU 101_1 selects storage battery 22 and power system 6 as candidates for the supply source of the scheduled power usage amount ($\alpha$) in the selected time slot. CPU 101_1 sets a candidate for a partial amount of the scheduled power usage amount ($\alpha$) to be covered by storage battery 22, as ($\gamma$-L), and sets a candidate for a partial amount of the scheduled power usage amount ($\alpha$) to be covered by power system 6, as ($\alpha$-($\gamma$-L)).

In the case of NO in step S40, in step S44, CPU 101_1 selects power system 6 as a candidate for the supply source of all of the scheduled power usage amount ($\alpha$) in the selected time slot.

In step S45 after steps S34, S36, S38, S39, and S42 to S44, CPU 101_1 judges whether or not reflecting the selected candidate(s) affects a breakdown of the power supply sources determined for a time slot having a priority higher than that of the selected time slot. When it is not possible to implement the breakdown of the power supply sources determined for the time slot having a priority higher than that of the selected time slot, CPU 101_1 judges that the breakdown is affected.

When a candidate including storage battery 22 as the power supply source is reflected, the remaining power storage amount ($\gamma$) decreases in a time slot later than the selected time slot. Accordingly, there may occur a situation where, although storage battery 22 is determined as the supply source of the scheduled power usage amount ($\alpha$) in a time slot that is later than the selected time slot and has a priority higher than that of the selected time slot, the scheduled power usage amount ($\alpha$) cannot be covered by the power supplied from storage battery 22. In such a case, CPU 101_1 judges that the breakdown of the power supply sources determined for the time slot having a priority higher than that of the selected time slot is affected.

In the case of YES in step S45, in step S46, CPU 101_1 rejects the candidate(s) selected in steps S34, S36, S38, S39, and S42 to S44. That is, CPU 101_1 does not adjust the breakdown of the power supply sources in the selected time slot.

In the case of NO in step S45, in step S47, CPU 101_1 reflects the candidate(s) selected in steps S34, S36, S38, S39, and S42 to S44. That is, CPU 101_1 adjusts the breakdown of the power supply sources in the selected time slot so as to match the selected candidate(s). Furthermore, CPU 101 adjusts the remaining power storage amount ($\gamma$) in the time slot later than the selected time slot, in accordance with the adjustment in the selected time slot.

<Details of Step S3>

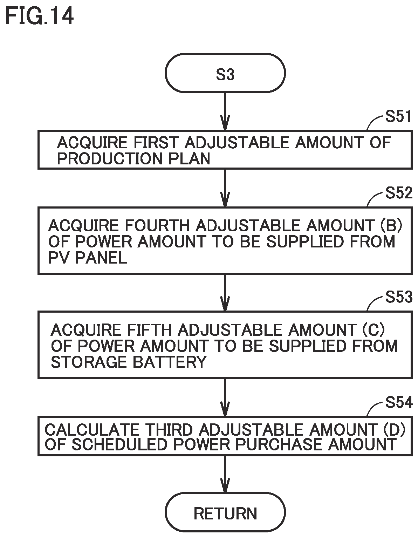

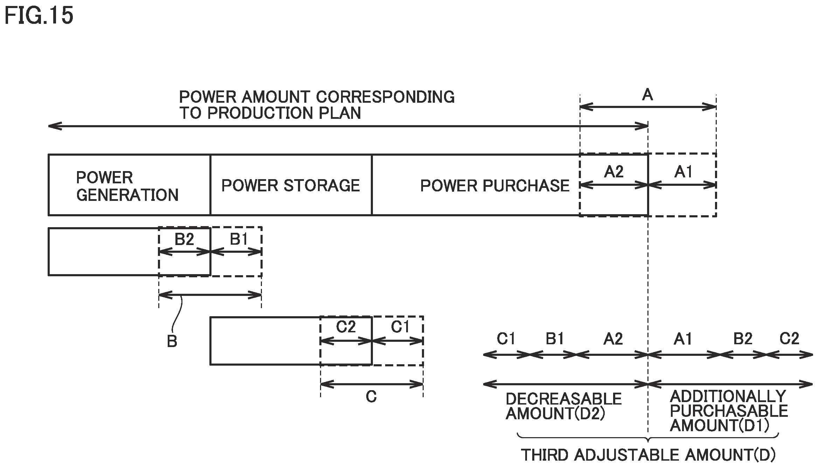

Details of step S3 will be described with reference to Figs. 14 and 15. Fig. 14 is a flowchart showing a flow of processing of a subroutine in step S3. Fig. 15 is a diagram illustrating processing in step S3. Steps S51 to S54 in Fig. 15 are performed for each time slot.

First, in step S51, CPU 101_1 of prediction system 10 acquires the first adjustable amount of the production plan. The first adjustable amount includes an increasable amount and a decreasable amount of a production amount.

In the next step S52, CPU 101_1 acquires the fourth adjustable amount (B) of power to be supplied from PV panel 21. The fourth adjustable amount (B) includes an increasable amount (B 1) and a decreasable amount (B2).

In the next step S53, CPU 101_1 acquires the fifth adjustable amount (C) of power to be supplied from storage battery 22. The fifth adjustable amount (C) includes an increasable amount (C1) and a decreasable amount (C2).

In the next step S54, CPU 101_1 calculates the third adjustable amount (D) of the scheduled power purchase amount, based on the first adjustable amount, the fourth adjustable amount (B), and the fifth adjustable amount (C). The third adjustable amount (D) includes an additionally purchasable amount (D1) and a decreasable amount (D2). The additionally purchasable amount (D1) is utilized for an increase DR. The decreasable amount (D2) is utilized for a decrease DR.

Specifically, CPU 101_1 calculates a sixth adjustable amount (A) of the scheduled power usage amount, by multiplying the first adjustable amount by variation coefficient $\alpha$ described above. The sixth adjustable amount (A) includes an increasable amount (A1) and a decreasable amount (A2). CPU 101_1 calculates the sum (A1+B2+C2) of the increasable amount (A1), the decreasable amount (B2), and the decreasable amount (C2), as the additionally purchasable amount (D1). CPU 101_1 calculates the sum (A2+B1+C1) of the decreasable amount (A2), the increasable amount (B1), and the increasable amount (C1), as the decreasable amount (D2).

<Processing in Power Network for Power Trading in Current-day Market>

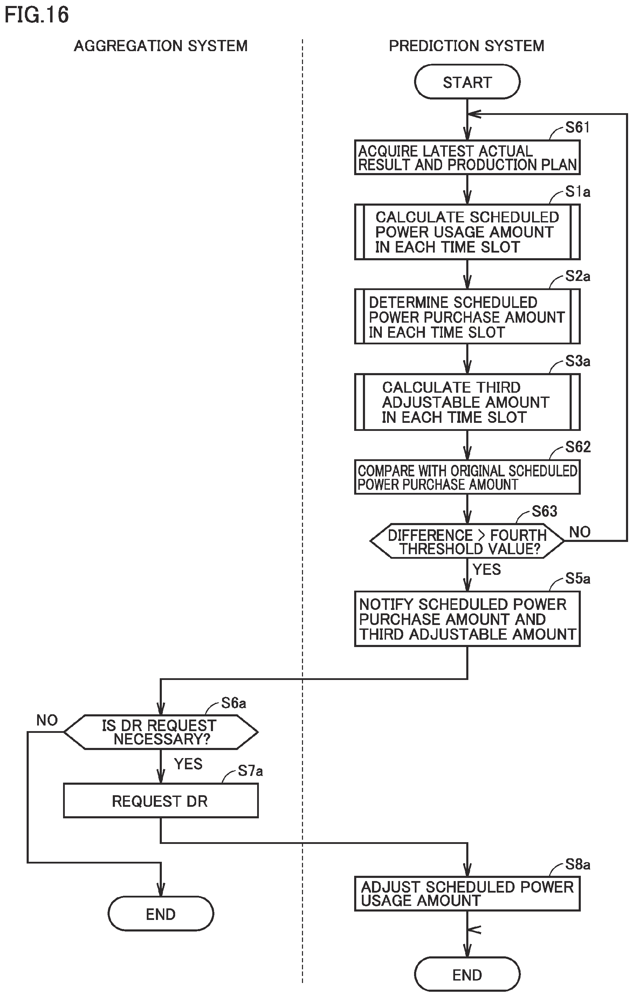

Fig. 16 is a flowchart showing an example of a flow of processing in the power network for power trading in the current-day market.

First, in step S61, CPU 101_1 of prediction system 10 reflects the latest actual result of the consumed power amount in actual result data 12. Furthermore, CPU 101_1 acquires production plan data 11 indicating the latest production plan.

Next, CPU 101_1 sequentially performs steps S1a to S3a. Step S1a differs from step S1 described above only in that step S1a is performed for each time slot in units of 30 minutes in a period from a current time point to 24 o'clock on the current day. Step S2a differs from step S2 described above only in that i) step S2a is performed for each time slot in units of 30 minutes in the period from the current time point to 24 o'clock on the current day, ii) as the power trading price, the current-day market price is used instead of the spot market price, and iii) as the initial value of the remaining power storage amount ($\gamma$), a charge amount of storage battery 22 at the current time point is used. It should be noted that the current-day market price corresponds to the "latest power trading price" in the present disclosure. Step S3a differs from step S3 described above only in that i) step S3a is performed for each time slot in units of 30 minutes in the period from the current time point to 24 o'clock on the current day, and ii) as the power trading price, the current-day market price is used instead of the spot market price. Accordingly, detailed description of steps S1a to S3a will be omitted.

In the next step S62, CPU 101_1 compares, for each time slot, a scheduled power purchase amount calculated in step S2a with the scheduled power purchase amount determined for the spot market (the scheduled power purchase amount determined in step S2 of the flow shown in Fig. 5), and calculates a difference therebetween.

In the next step S63, CPU 101_1 judges whether or not there is a time slot in which the difference exceeds a predetermined fourth threshold value.

When there is no time slot in which the difference exceeds the predetermined fourth threshold value (NO in step S53), the processing returns to step S61.

When there is a time slot in which the difference exceeds the predetermined fourth threshold value (YES in step S53), CPU 101_1 determines the time slot as a time slot for which notification to aggregator 4 is necessary, and performs step S5a. Step S5a is the same as step S5 described above. Accordingly, detailed description of step S5a will be omitted. After step S5a, steps S6a to S8a are sequentially performed. Steps S6a to S8a are the same as steps S6 to S8 described above. Accordingly, detailed description of steps S6a to S8a will be omitted.

As shown in Fig. 16, CPU 101_1 operating as determination unit 14 periodically updates the scheduled power purchase amount, based on the scheduled power usage amount calculated based on the latest production plan, the latest power trading price, and the latest situation of the one or more power supply sources.

<Modifications>

In the above description, prediction system 10 is provided to facility 3 (the consumer). However, all or part of prediction system 10 may not be provided to facility 3. For example, determination unit 14 may be provided outside facility 3.

Further, prediction system 10 may be shared by a plurality of facilities 3. In this case, for each of the plurality of facilities 3, prediction system 10 calculates a scheduled power usage amount in each time slot, and determines a scheduled power purchase amount in each time slot.

The power trading price may vary depending on a region. Accordingly, adjustment unit 19 of prediction system 10 shared by the plurality of facilities 3 may adjust production plans of the plurality of facilities 3 in accordance with power trading prices of regions to which the plurality of facilities 3 belong. For example, adjustment unit 19 decreases a scheduled production amount of facility 3 that belongs to a region in which the power trading price is relatively high. Thereby, facility 3 that belongs to the region in which the power trading price is relatively high can easily obtain a higher reward by cooperating on a request for a decrease DR.

CPU 101_1 may omit a part of the processing of the subroutine in step S26 shown in Fig. 13. For example, in the case of NO in step S33, CPU 101_1 may omit steps S35 to S39 and advance the processing to step S40. In the case of YES in step S40, CPU 101_1 may omit steps S41 and S43 and advance the processing to step S42.

Private power generation system 20 may have only PV panel 21, and may not have storage battery 22. In this case, determination unit 14 determines a partial amount to be covered by power system 6 (a scheduled power purchase amount) and a partial amount to be covered by PV panel 21, of the scheduled power usage amount.

Alternatively, facility 3 may include only storage battery 22, instead of private power generation system 20. In this case, determination unit 14 determines a partial amount to be covered by power system 6 (a scheduled power purchase amount) and a partial amount to be covered by storage battery 22, of the scheduled power usage amount.

CPU 101_1 operating as determination unit 14 may utilize, as the power trading price, an incentive price provided from aggregator 4. That is, the incentive price is an example of the "power trading price" in the present disclosure. The incentive price is determined for each time slot, in accordance with the contract between the consumer and aggregator 4.

§3 Additional Aspects

As described above, the present embodiment includes the following disclosures.

(Configuration 1)

A prediction system (10) for predicting power demand of each of one or more facilities (3) configured to produce a product, the prediction system (10) including:

a calculation unit (13, 101_1) configured to calculate, for each of the one or more facilities (3), a scheduled power usage amount in a target time slot, based on actual result data (12) of consumed power and a production plan of the product; and

a determination unit (14, 101_1) configured to determine, for each of the one or more facilities (3), a scheduled power purchase amount from a power system in the target time slot, based on the scheduled power usage amount and a power trading price in the target time slot.

(Configuration 2)

The prediction system (10) according to Configuration 1, wherein the determination unit (14, 101_1) is configured to further determine a partial amount of the scheduled power usage amount to be covered by each of one or more power supply sources (21, 22) different from the power system, based on the scheduled power usage amount and the power trading price, the one or more power supply sources (21, 22) including at least one of a private power generation device (21) or a power storage device (22).

(Configuration 3)

The prediction system (10) according to Configuration 2, wherein

the one or more power supply sources include a solar power generation device (21), and
the determination unit (14, 101_1) is configured to determine the scheduled power purchase amount and the partial amount of each of the one or more power supply sources (21, 22), based on weather forecast information, the scheduled power usage amount, and the power trading price.

(Configuration 4)

The prediction system (10) according to Configuration 2 or 3, wherein
the determination unit (14, 101_1) is configured to

set a priority based on the power trading price, for each of a plurality of time slots included in a target period, sequentially select the target time slot in accordance with the priority, from among the plurality of time slots, and determine the scheduled power purchase amount and the partial amount of each of the one or more power supply sources for the target time slot, so as not to affect the scheduled power purchase amount and the partial amount of each of the one or more power supply sources determined for a time slot having the priority higher than that of the target time slot, of the plurality of time slots.

(Configuration 5)

The prediction system (10) according to any one of Configurations 1 to 4, further including a notification unit (17, 101_1, 106) configured to notify an aggregator (4) of notification data indicating information on the scheduled power purchase amount.

(Configuration 6)

The prediction system (10) according to any one of Configurations 2 to 4, wherein

the determination unit (14, 101_1) is configured to further determine, based on at least one of a first adjustable amount of the production plan or a second adjustable amount of power to be supplied from the one or more power supply sources, a third adjustable amount of the scheduled power purchase amount, and
the prediction system (10) further includes a notification unit (17, 101_1, 106) configured to notify an aggregator (4) of notification data indicating information on the scheduled power purchase amount and the third adjustable amount.

(Configuration 7)

The prediction system (10) according to Configuration 5 or 6, wherein the notification unit (17, 101_1, 106) is configured to judge whether or not to notify the aggregator (4) of the notification data, based on the power trading price.

(Configuration 8)

The prediction system (10) according to Configuration 6, further including an output unit (18, 101_1, 105) configured to output a power cost corresponding to the third adjustable amount.

(Configuration 9)

The prediction system (10) according to any one of Configurations 2 to 4, wherein the determination unit (14, 101_1) is configured to periodically update the scheduled power purchase amount, based on the scheduled power usage amount calculated based on a latest production plan, a latest power trading price, and a latest situation of the one or more power supply sources.

(Configuration 10)

The prediction system (10) according to any one of Configurations 1 to 9, further including an adjustment unit (19, 101_1) configured to adjust, when the one or more facilities (3) respond to a request for a demand response from an aggregator (4), the scheduled power usage amount so as to satisfy the request.

(Configuration 11)

The prediction system (10) according to any one of Configurations 1 to 9, wherein

the one or more facilities (3) include a plurality of facilities, and
the prediction system (10) further includes an adjustment unit (19, 101_1) configured to adjust the production plans of the plurality of facilities, in accordance with the power trading price.

(Configuration 12)

An aggregation system (60) in communication with the prediction system (10) according to any one of Configurations 5 to 7, the aggregation system (60) including:
a judgment unit (61, 101_2) configured to judge whether or not to request a demand response for each of the one or more facilities (3), based on the notification data and a scheduled power supply amount from the power system.

(Configuration 13)

A method for predicting power demand of a facility (3) configured to produce a product, the method including:

calculating, by a processor (101_1), for the facility (3), a scheduled power usage amount in a target time slot, based on actual result data of consumed power and a production plan of the product (S1); and
determining, by the processor (101_1), for the facility (3), a scheduled power purchase amount from a power system in the target time slot, based on the scheduled power usage amount and a power trading price in the target time slot (S2).

(Configuration 14)

A program (131_1) for causing a computer to perform a method for predicting power demand of a facility (3) configured to produce a product, the method including

calculating, for the facility (3), a scheduled power usage amount in a target time slot, based on actual result data of consumed power and a production plan of the product (S1), and
determining, for the facility (3), a scheduled power purchase amount from a power system in the target time slot, based on the scheduled power usage amount and a power trading price in the target time slot (S2).

Although the embodiment of the present invention has been described, it should be understood that the embodiment disclosed herein is illustrative and non-restrictive in every respect. The scope of the present invention is defined by the scope of the claims, and is intended to include any modifications within the scope and meaning equivalent to the scope of the claims.

REFERENCE SIGNS LIST

1: power network; 2: retail electricity provider; 3: facility; 4: aggregator; 5: power trading market; 6: power system; 10: prediction system; 11: production plan data; 12, 12a, 12b: actual result data; 13: calculation unit; 14: determination unit; 15: storage unit; 16: acquisition unit; 17, 62: notification unit; 18: output unit; 19: adjustment unit; 20: private power generation system; 21: PV panel; 22: storage battery; 25: control unit; 30: energy management device; 40: installation; 50: power meter; 60: aggregation system; 61: judgment unit; 101, 101_1, 101_2: CPU; 102: memory; 103: storage; 104: input interface; 105: display controller; 106: communication interface; 107: data reader/writer; 108: bus; 120: input device; 122: display; 124: storage medium; 131, 131_1, 131_2: program.

**Claims**

1. A prediction system for predicting power demand of each of one or more facilities configured to produce a product, the prediction system comprising:

   a calculation unit configured to calculate, for each of the one or more facilities, a scheduled power usage amount in a target time slot, based on actual result data of consumed power and a production plan of the product; and
   a determination unit configured to determine, for each of the one or more facilities, a scheduled power purchase amount from a power system in the target time slot, based on the scheduled power usage amount and a power trading price in the target time slot.

2. The prediction system according to claim 1, wherein the determination unit is configured to further determine a partial amount of the scheduled power usage amount to be covered by each of one or more power supply sources different from the power system, based on the scheduled power usage amount and the power trading price, the one or more power supply sources including at least one of a private power generation device or a power storage device.

3. The prediction system according to claim 2, wherein

   the one or more power supply sources include a solar power generation device, and
   the determination unit is configured to determine the scheduled power purchase amount and the partial amount of each of the one or more power supply sources, based on weather forecast information, the scheduled power usage amount, and the power trading price.

4. The prediction system according to claim 2 or 3, wherein the determination unit is configured to

   set a priority based on the power trading price, for each of a plurality of time slots included in a target period, sequentially select the target time slot in accordance with the priority, from among the plurality of time slots, and determine the scheduled power purchase amount and the partial amount of each of the one or more power supply sources for the target time slot, so as not to affect the scheduled power purchase amount and the partial amount of each of the one or more power supply sources determined for a time slot having the priority higher than that of the target time slot, of the plurality of time slots.

5. The prediction system according to any one of claims 1 to 4, further comprising a notification unit configured to notify an aggregator of notification data indicating information on the scheduled power purchase amount.

6. The prediction system according to any one of claims 2 to 4, wherein

   the determination unit is configured to further determine, based on at least one of a first adjustable amount of the production plan or a second adjustable amount of power to be supplied from the one or more power supply sources, a third adjustable amount of the scheduled power purchase amount, and
   the prediction system further comprises a notification unit configured to notify an aggregator of notification data indicating information on the scheduled power purchase amount and the third adjustable amount.

7. The prediction system according to claim 5 or 6, wherein the notification unit is configured to judge whether or not to notify the aggregator of the notification data, based on the power trading price.

8. The prediction system according to claim 6, further comprising an output unit configured to output a power cost corresponding to the third adjustable amount.

9. The prediction system according to any one of claims 2 to 4, wherein the determination unit is configured to periodically update the scheduled power purchase amount, based on the scheduled power usage amount calculated based on a latest production plan, a latest power trading price, and a latest situation of the one or more power supply sources.

10. The prediction system according to any one of claims 1 to 9, further comprising an adjustment unit configured to adjust, when the one or more facilities respond to a request for a demand response from an aggregator, the scheduled power usage amount so as to satisfy the request.

11. The prediction system according to any one of claims 1 to 9, wherein

the one or more facilities include a plurality of facilities, and

the prediction system further comprises an adjustment unit configured to adjust the production plans of the plurality of facilities, in accordance with the power trading price.

12. An aggregation system in communication with the prediction system according to any one of claims 5 to 7, the aggregation system comprising:

a judgment unit configured to judge whether or not to request a demand response for each of the one or more facilities, based on the notification data and a scheduled power supply amount from the power system.

13. A method for predicting power demand of a facility configured to produce a product, the method comprising:

calculating, by a processor, for the facility, a scheduled power usage amount in a target time slot, based on actual result data of consumed power and a production plan of the product; and

determining, by the processor, for the facility, a scheduled power purchase amount from a power system in the target time slot, based on the scheduled power usage amount and a power trading price in the target time slot.

14. A program for causing a computer to perform a method for predicting power demand of a facility configured to produce a product, the method including

calculating, for the facility, a scheduled power usage amount in a target time slot, based on actual result data of consumed power and a production plan of the product, and

determining, for the facility, a scheduled power purchase amount from a power system in the target time slot, based on the scheduled power usage amount and a power trading price in the target time slot.

FIG.1

EP 4 757 096 A1

FIG.2

FIG.3

FIG.4

AGGREGATION SYSTEM — 60

NOTIFICATION UNIT — 62

JUDGMENT UNIT — 61

SCHEDULED POWER SUPPLY AMOUNT — 2

DR REQUEST — 10

SCHEDULED POWER PURCHASE AMOUNT, ADJUSTABLE AMOUNT — 10

# FIG.5

AGGREGATION SYSTEM | PREDICTION SYSTEM

**PREDICTION SYSTEM**

( START )

**S1**
CALCULATE SCHEDULED POWER USAGE AMOUNT IN EACH TIME SLOT

**S2**
DETERMINE SCHEDULED POWER PURCHASE AMOUNT IN EACH TIME SLOT

**S3**
CALCULATE THIRD ADJUSTABLE AMOUNT IN EACH TIME SLOT

**S4**
NOTIFICATION IS NECESSARY — NO

YES

**S5**
NOTIFY SCHEDULED POWER PURCHASE AMOUNT AND THIRD ADJUSTABLE AMOUNT

**AGGREGATION SYSTEM**

**S6**
NO — IS DR REQUEST NECESSARY?

YES

**S7**
REQUEST DR

( END )

**S8**
ADJUST SCHEDULED POWER USAGE AMOUNT

( END )

FIG.6

CONSUMED
POWER AMOUNT
(kWh)

Legend:
- ELECTRIC LIGHTS AND RECEPTACLES
- MOTIVE POWER
- AIR CONDITIONERS (NO CONTROL)

x-axis: 0 O'CLOCK, 6 O'CLOCK, 12 O'CLOCK, 18 O'CLOCK, 23 O'CLOCK, TIME

MANUFACTURING PERIOD

EP 4 757 096 A1

FIG.7

EP 4 757 096 A1

| ITEM NAME | PRODUCTION AMOUNT | START TIME | END TIME | POWER AMOUNT (kWh) | PROCESS NAME | USED INSTALLATION PATTERN |
|---|---|---|---|---|---|---|
| AA | 1000 | 9:00 | 10:00 | 13.25 | PROCESS P | 40_1 |
| AA | 1000 | 10:00 | 11:00 | 13.25 | PROCESS P | 40_1 |
| BB | 3000 | 11:00 | 12:00 | 59.60 | PROCESS P | 40_1, 40_2, 40_3 |
| BB | 3000 | 13:00 | 14:00 | 59.60 | PROCESS P | 40_1, 40_2, 40_3 |
| AA | 1000 | 14:00 | 15:00 | 13.25 | PROCESS P | 40_1 |
| CC | 5000 | 15:30 | 16:30 | 33.11 | PROCESS P | 40_3 |
| DD | 1000 | 17:00 | 17:30 | 33.11 | PROCESS P | 40_2 |

12a

12

| TIME SLOT | CONSUMED POWER AMOUNT(kWh) | ENVIRONMENTAL INFORMATION |
|---|---|---|
| 00:00−00:30 | 5.25 | WEATHER: FINE, TEMPERATURE: 15.0℃, HUMIDITY: 60% |
| ⋮ | ⋮ | ⋮ |

12b

FIG.8

```
                    ┌──────────────┐
                    │      S1      │
                    └──────┬───────┘
                           │
                           ▼                        ⌒S11
    ┌──────────────────────────────────────────────┐
    │          READ ACTUAL RESULT DATA              │
    └──────────────────────┬───────────────────────┘
                           │
                           ▼                        ⌒S12
    ┌──────────────────────────────────────────────┐
    │      CALCULATE VARIATION COEFFICIENT a        │
    │     AND FIXED PORTION b, FOR EACH ITEM        │
    └──────────────────────┬───────────────────────┘
                           │
                           ▼                        ⌒S13
    ┌──────────────────────────────────────────────┐
    │          READ PRODUCTION PLAN DATA            │
    └──────────────────────┬───────────────────────┘
                           │
                           ▼                        ⌒S14
    ┌──────────────────────────────────────────────┐
    │  CALCULATE SCHEDULED POWER USAGE              │
    │  AMOUNT, BASED ON VARIATION COEFFICIENT a,    │
    │  FIXED PORTION b, AND SCHEDULED               │
    │  PRODUCTION AMOUNT                            │
    └──────────────────────┬───────────────────────┘
                           │
                           ▼                        ⌒S15
    ┌──────────────────────────────────────────────┐
    │  GENERATE CORRELATION INFORMATION THAT        │
    │  DEFINES CORRELATION BETWEEN ENVIRONMENTAL    │
    │  INFORMATION AND FIXED PORTION b IN PERIOD    │
    │  OTHER THAN MANUFACTURING PERIOD             │
    └──────────────────────┬───────────────────────┘
                           │
                           ▼                        ⌒S16
    ┌──────────────────────────────────────────────┐
    │  CALCULATE SCHEDULED POWER USAGE AMOUNT       │
    │  IN PERIOD OTHER THAN MANUFACTURING PERIOD,   │
    │  BASED ON CORRELATION INFORMATION            │
    └──────────────────────┬───────────────────────┘
                           │
                           ▼
                    ┌──────────────┐
                    │    RETURN    │
                    └──────────────┘
```

FIG.9

FIG.10

| ITEM NAME | SCHEDULED PRODUCTION AMOUNT | SCHEDULED START TIME | SCHEDULED END TIME |
|---|---|---|---|
| AA | 2000 | 9:00 | 11:00 |
| CC | 5000 | 11:00 | 12:00 |
| DD | 3000 | 13:00 | 14:30 |
| AA | 1000 | 14:30 | 15:30 |
| BB | 3000 | 16:00 | 17:00 |
| DD | 1000 | 17:00 | 17:30 |

FIG.11

POWER AMOUNT
(kWh)

POWER TRADING
PRICE

γ

β

α

P

REFERENCE
PRICE

0    6    12    18    24

TIME SLOTS (48 FRAMES)

EP 4 757 096 A1

FIG.12

```
        ┌──────────────┐
        │      S2      │
        └──────┬───────┘
               │
               ▼                    ┌─S21
    ┌──────────────────────────────┐
    │   ACQUIRE POWER TRADING       │
    │   PRICE (P) IN EACH TIME SLOT │
    └──────────────┬────────────────┘
                   │                ┌─S22
    ┌──────────────────────────────┐
    │  CALCULATE PREDICTED POWER    │
    │  GENERATION AMOUNT (β) OF PV  │
    │  PANEL IN EACH TIME SLOT      │
    └──────────────┬────────────────┘
                   │                ┌─S23
    ┌──────────────────────────────┐
    │  CALCULATE INITIAL VALUE OF   │
    │  REMAINING POWER STORAGE      │
    │  AMOUNT (γ) IN EACH TIME SLOT │
    └──────────────┬────────────────┘
                   │                ┌─S24
    ┌──────────────────────────────┐
    │  DETERMINE PRIORITY OF EACH   │
    │  TIME SLOT, BASED ON POWER    │
    │  TRADING PRICE (P)            │
    └──────────────┬────────────────┘
                   │                ┌─S25
    ┌──────────────────────────────┐
    │  SELECT TIME SLOT HAVING      │
    │  HIGHEST PRIORITY             │
    └──────────────┬────────────────┘
                   │                ┌─S26
    ┌──────────────────────────────┐
    │  ADJUST BREAKDOWN OF          │
    │  POWER SUPPLY SOURCES,        │
    │  FOR SELECTED TIME SLOT       │
    └──────────────┬────────────────┘
                   │                ┌─S27
                  ╱ IS THERE         ╲  NO
                 ╱ UNSELECTED TIME    ╲────────┐
                 ╲ SLOT?              ╱        │
                  ╲                  ╱         │
                   │ YES     ┌─S28             ▼
    ┌──────────────────────────────┐   ┌─────────────┐
    │ SELECT TIME SLOT HAVING SECOND│   │   RETURN    │
    │ HIGHEST PRIORITY              │   └─────────────┘
    └───────────────────────────────┘
```

# FIG.13

Flowchart:

S26

S31: TIME SLOT IN WHICH POWER CAN BE GENERATED? — NO → (to S40 path) / YES ↓

S32: P ≤ REFERENCE PRICE — NO → (loop back) / YES ↓

S33: $\beta \geq \alpha$ — NO → S35 / YES ↓

S34: SELECT PV PANEL → ①

S35: $\gamma \geq$ LOWER LIMIT VALUE (L) — YES → S37 / NO ↓

S36: SELECT PV PANEL AND POWER SYSTEM → ①

S37: $\gamma - L \geq \alpha - \beta$ — NO → S39 / YES ↓

S38: SELECT PV PANEL AND STORAGE BATTERY → ①

S39: SELECT PV PANEL, STORAGE BATTERY, AND POWER SYSTEM → ①

S40: $\gamma \geq$ LOWER LIMIT VALUE (L) — NO → S44 / YES ↓

S41: $\gamma - L \geq \alpha$ — NO → S43 / YES ↓

S42: SELECT STORAGE BATTERY → ①

S43: SELECT STORAGE BATTERY AND POWER SYSTEM → ①

S44: SELECT POWER SYSTEM → ①

S45: IS TIME SLOT HAVING HIGHER PRIORITY AFFECTED? — YES → S46 / NO ↓

S46: REJECT SELECTED RESULT

S47: REFLECT SELECTED RESULT

RETURN

EP 4 757 096 A1

FIG.14

S3

S51
ACQUIRE FIRST ADJUSTABLE AMOUNT OF
PRODUCTION PLAN

S52
ACQUIRE FOURTH ADJUSTABLE AMOUNT (B)
OF POWER AMOUNT TO BE SUPPLIED FROM
PV PANEL

S53
ACQUIRE FIFTH ADJUSTABLE AMOUNT (C)
OF POWER AMOUNT TO BE SUPPLIED FROM
STORAGE BATTERY

S54
CALCULATE THIRD ADJUSTABLE AMOUNT (D)
OF SCHEDULED POWER PURCHASE AMOUNT

RETURN

FIG.15

EP 4 757 096 A1

FIG.16

AGGREGATION SYSTEM                          PREDICTION SYSTEM

```
                                              ( START )
                                                  │
                                                  ▼
                                    S61 ┌──────────────────────────┐
                                        │ ACQUIRE LATEST ACTUAL    │
                                        │ RESULT AND PRODUCTION PLAN│
                                        └──────────────────────────┘
                                                  │
                                                  ▼
                                    S1a ┌──────────────────────────┐
                                        │ CALCULATE SCHEDULED      │
                                        │ POWER USAGE AMOUNT       │
                                        │ IN EACH TIME SLOT        │
                                        └──────────────────────────┘
                                                  │
                                                  ▼
                                    S2a ┌──────────────────────────┐
                                        │ DETERMINE SCHEDULED      │
                                        │ POWER PURCHASE AMOUNT    │
                                        │ IN EACH TIME SLOT        │
                                        └──────────────────────────┘
                                                  │
                                                  ▼
                                    S3a ┌──────────────────────────┐
                                        │ CALCULATE THIRD          │
                                        │ ADJUSTABLE AMOUNT        │
                                        │ IN EACH TIME SLOT        │
                                        └──────────────────────────┘
                                                  │
                                                  ▼
                                    S62 ┌──────────────────────────┐
                                        │ COMPARE WITH ORIGINAL    │
                                        │ SCHEDULED POWER PURCHASE │
                                        │ AMOUNT                   │
                                        └──────────────────────────┘
                                                  │
                                                  ▼
                                    S63  ◇ DIFFERENCE > FOURTH ◇  NO
                                         ◇ THRESHOLD VALUE?    ◇───┐
                                                  │ YES
                                                  ▼
                                    S5a ┌──────────────────────────┐
                                        │ NOTIFY SCHEDULED POWER   │
                                        │ PURCHASE AMOUNT AND      │
                                        │ THIRD ADJUSTABLE AMOUNT  │
                                        └──────────────────────────┘
```

S6a  IS DR REQUEST NECESSARY?  — NO

YES

S7a  REQUEST DR

END

S8a  ADJUST SCHEDULED POWER USAGE AMOUNT

END

## INTERNATIONAL SEARCH REPORT

| International application No. |
| --- |
| **PCT/JP2024/022404** |

**A. CLASSIFICATION OF SUBJECT MATTER**

*H02J 3/00*(2006.01)i; *G06Q 50/04*(2012.01)i; *G06Q 50/06*(2024.01)i
FI: H02J3/00 170; H02J3/00 130; H02J3/00 180; G06Q50/04; G06Q50/06

According to International Patent Classification (IPC) or to both national classification and IPC

**B. FIELDS SEARCHED**

Minimum documentation searched (classification system followed by classification symbols)

H02J3/00; G06Q50/04; G06Q50/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2023-102130 A (IDEMITSU KOSAN CO., LTD.) 24 July 2023 (2023-07-24)<br>claim 1 | 1-14 |
| A | JP 2022-86196 A (OMRON CORPORATION) 09 June 2022 (2022-06-09)<br>paragraphs [0052], [0070] | 1-14 |

☐ Further documents are listed in the continuation of Box C.   ☑ See patent family annex.

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **06 August 2024** | **13 August 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/022404**

| Patent document cited in search report | | | Publication date (day/month/year) | Patent family member(s) | Publication date (day/month/year) |
|---|---|---|---|---|---|
| JP | 2023-102130 | A | 24 July 2023 | (Family: none) | |
| JP | 2022-86196 | A | 09 June 2022 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016081074 A